Europäisches Patentamt

European Patent Office

Office européen des brevets

(19)

(11)     EP 1 057 248 B1

(12)     **FASCICULE DE BREVET EUROPEEN**

| | |
|---|---|
| (45) Date de publication et mention de la délivrance du brevet:<br>**07.05.2003 Bulletin 2003/19** | (51) Int Cl.7: **H02M 5/257**, H02P 5/418,<br>H05B 39/08 |
| (21) Numéro de dépôt: **99903768.2** | (86) Numéro de dépôt international:<br>**PCT/FR99/00343** |
| (22) Date de dépôt: **16.02.1999** | (87) Numéro de publication internationale:<br>**WO 99/043075 (26.08.1999 Gazette 1999/34)** |

(54) **PROCEDE DE COMMANDE PAR ANGLE DE PHASE**

PHASENANSCHNITTSTEUERVERFAHREN

IMPEDANCE ANGLE CONTROL METHOD

| | |
|---|---|
| (84) Etats contractants désignés:<br>**DE FR IT** | (72) Inventeur: **RAFFESTIN, Luc Thomson-CSF**<br>**94117 Arcueil Cedex (FR)** |
| (30) Priorité: **20.02.1998 FR 9802087** | (74) Mandataire: **Guérin, Michel et al**<br>**THALES Intellectual Property**<br>**13, Avenue du Président Salvador Allende**<br>**94117 Arcueil Cédex (FR)** |
| (43) Date de publication de la demande:<br>**06.12.2000 Bulletin 2000/49** | |
| (73) Titulaire: **Crouzet Automatismes**<br>**26000 Valence (FR)** | (56) Documents cités:<br>**DE-A- 3 239 968      DE-A- 3 536 265**<br>**DE-A- 4 038 857      US-A- 4 287 468** |

## Description

La présente invention a pour objet un procédé de commande par angle de phase utilisable aussi bien dans les domaines industriels que domestiques. Elle concerne en particulier, respectivement, la commande variable des moteurs et les variateurs de lumière. Le principe de la commande par angle de phase est d'utiliser un signal alternatif de puissance, et de provoquer la commutation dans une charge de ce signal de puissance à une date utile, toujours la même, dans une période de ce signal alternatif de puissance. Le calage de cette date utile par rapport à une date initiale permet, par synchronisation, de régler la puissance.

La fréquence du signal de puissance utilisée est une caractéristique essentielle au dispositif de réglage qui met en oeuvre ce principe. Un premier problème survient du fait de la variation des fréquences utilisées : soit 60 Hz en Amérique et 50 Hz en Europe et le reste du monde. La conception des dispositifs correspondants doit donc être différenciée. D'autre part, la plage de réglage de la commande de phase dérive en fonction des contraintes d'utilisation du circuit intégré qui réalise cette fonction de commutation. Ainsi, cette plage de réglage est notamment dépendante de la fréquence d'horloge du microcontrôleur utilisé, de sa température, et de sa tension d'alimentation. Surtout si la sensibilité du réglage n'est pas linéaire.

Ce type d'inconvénient peut ne pas être rédhibitoire dans le cas où le variateur utilisé est à commande manuelle. Encore que le confort d'utilisation en soit altéré, surtout si, à un endroit de la plage de réglage, les résultats de la commande deviennent beaucoup plus sensibles qu'à un autre endroit.

Par contre dans le domaine des asservissements, la variation de sensibilité rencontrée tout au long de la plage de réglage avec des dispositifs à commande de phase n'est pas tolérable. Cette sensibilité conditionne l'activité d'un actionneur en fonction d'un signal de commande. En effet, si la commande doit être asservie, le gain en boucle ouverte de l'asservissement peut alors être différent selon que la valeur de consigne se situe à un endroit de la plage de réglage ou à un autre. Pour éviter les phénomènes de pompage, d'oscillation de l'asservissement, on est obligé de tenir compte du gain maximal. Ceci a pour conséquence que, dans les zones de la plage de réglage où le gain est faible, la réactivité de l'asservissement est également faible. En quelque sorte le ralliement de l'activité de l'actionneur à la valeur de consigne qui lui est imposée, est plus ou moins rapide selon la sensibilité de la plage de réglage concernée.

Le document DE-A- 35 36 265 décrit un procédé de commande dans lequel le signal de commande est comparé à une fonction périodique générée à chaque alternance.

L'invention a pour objet de remédier à ce problème en prévoyant dans le circuit de commande, un moyen de linéarisation de l'activité de l'actionneur utilisé (une lampe, un chauffage, un moteur ou autre) au signal de commande disponible. Ce moyen est interposé entre le circuit de consigne et l'actionneur utilisé. On montrera que cette manière de faire conduit à régler tous les problèmes évoqués ci-dessus.

L'invention a donc pour objet un procédé de commande dans lequel on applique un signal électrique périodique à un actionneur par l'intermédiaire d'un interrupteur à coupure automatique, on produit un signal de commande, on détermine un écart temporel d'une date utile de commande par rapport à une date caractéristique de ce signal périodique en fonction de ce signal de commande, on commande la fermeture périodique de l'interrupteur à cette date utile dans chaque période en appliquant ce signal de commande à l'interrupteur, on règle l'activité de l'actionneur en modifiant le signal de commande, caractérisé en ce que on convertit le signal de commande par une conversion en un signal converti différent dont l'application provoque un comportement linéaire de l'activité de l'actionneur en fonction de ce signal de commande et on utilise le signal converti pour déterminer l'écart temporel. Lorsque l'activité est la vitesse, la conversion est avantageusement du type arcsinus. Lorsque l'activité est la puissance, la conversion est avantageusement du type arsinus au carré.

L'invention sera mieux comprise à la lecture de la description qui suit et à l'examen des figures qui l'accompagnent. Celles-ci ne sont données qu'à titre indicatif et nullement limitatif de l'invention. Les figures montrent :

- Figure 1 : un dispositif utilisable pour mettre en oeuvre le procédé de l'invention ;
- Figures 2a et 2b : les représentations d'une fonction de transfert habituelle et de la fonction de transfert réciproque mise en oeuvre, dans l'invention, pour corriger la non linéarité de cette fonction de transfert habituelle ;
- Figure 3 : une représentation schématique d'un mode d'élaboration de la fonction réciproque ;
- Figure 4 : une représentation schématique d'un mode d'élaboration de la correction de linéarité en fonction de l'expression tabulée de la fonction réciproque ;
- Figure 5 : des diagrammes temporels de signaux utilisables dans le procédé de l'invention ;
- Tableau 1 : une table de conversion réciproque correspondant à une linéarisation en puissance.

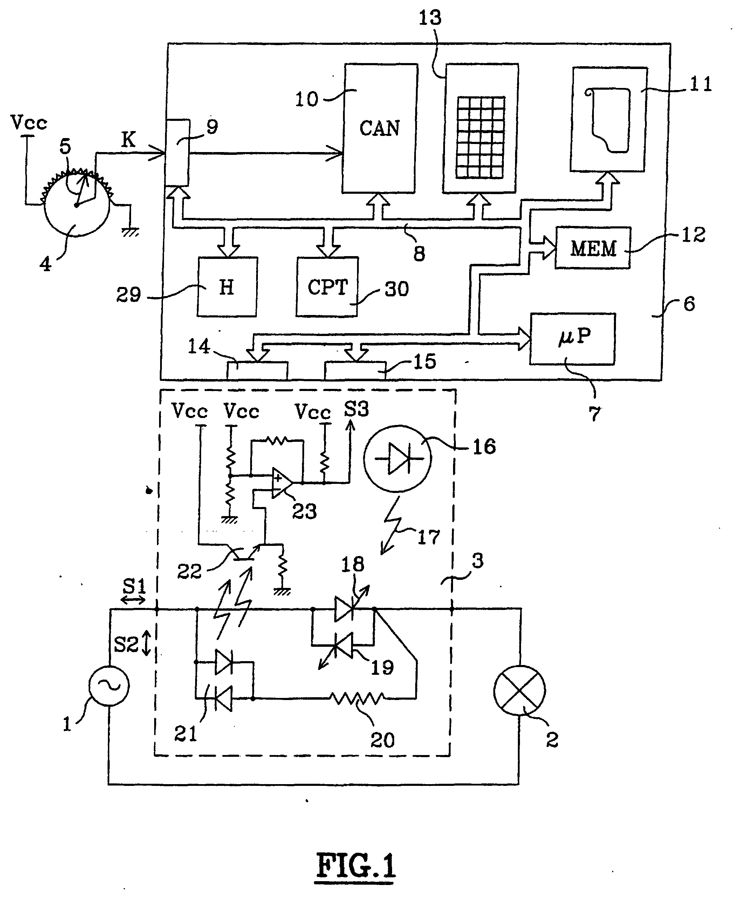

La figure 1 montre un dispositif utilisable pour mettre en oeuvre le procédé de l'invention, Un signal électrique périodique S1 est fourni par une source électrique 1. Il est appliqué à un actionneur 2 par l'intermédiaire d'un interrupteur 3 à coupure automatique. Comme on le verra plus loin, l'interrupteur 3 comporte essentiellement des triacs, ou des thyristors. Dans ceux-ci, la conduction est provoquée à un moment particulier du cycle du signal périodique produit par la source 1. Cette conduction se coupe automatiquement lorsque ce signal électrique s'inverse en polarité. Un potentiomètre 4, ou un dispositif similaire, permet de produire un signal de commande K.

Le procédé de l'invention étant un procédé de commande par angle de phase, on repère un écart temporel entre une date utile de commande de l'interrupteur 3 par rapport à une date caractéristique du signal périodique S1. En pratique, la date caractéristique du signal S1 est une date de passage par zéro de la tension de ce signal, au changement de polarité. On verra par la suite que cette date peut, dans certains cas, être difficile à mesurer et qu'il conviendra de tenir compte de l'écart, de l'erreur de mesure effectuée sur la détection de cette date caractéristique.

En d'autres termes, on détermine l'écart temporel d'une date utile de commande par rapport à une date caractéristique du signal périodique en fonction du signal de commande K.

D'une manière habituelle, le signal K est une fonction linéaire de l'écart temporel que l'on veut imposer. Par exemple, si la valeur du signal K est à 100% de sa valeur utile, le retard à l'allumage de l'interrupteur sera nul. Par contre, si la valeur de K est de 0%, le retard à l'allumage de l'interrupteur 3 sera total : égal à une demi-période du signal périodique.

L'interrupteur 3 ne sera alors pas allumé. De cette façon, on règle l'activité de l'actionneur 2 en modifiant le signal de commande, en pratique ici, en modifiant la position du curseur 5 du potentiomètre 4. Le potentiomètre 4 est alimenté entre VCC et la masse. Son curseur délivre une tension proportionnelle à VCC. Le signal K dans cet exemple est analogique.

Dans l'invention, on convertit le signal de commande K par une conversion, en un signal converti K' dont l'application provoque alors un comportement linéaire de l'activité de l'actionneur en fonction de ce signal de commande K. L'activité dont il sera question dans la suite de cet exposé, est la puissance développée par l'actionneur 2. Cela peut être un autre paramètre : par exemple sa vitesse. S'il s'agit élément de chauffage cela peut être sa température, ou la luminosité s'il s'agit d'un élément d'éclairage.

Pour convertir un signal de commande K, on utilise de préférence dans l'invention, un microcontrôleur 6. Le microcontrôleur 6 comporte essentiellement une unité arithmétique et logique 7 servant de microprocesseur. Le microprocesseur 7, est en relation par un bus de commandés, d'adresses et de données 8 avec une interface d'entrée 9, un convertisseur analogique numérique 10, une mémoire programme 11 et, une mémoire de travail 12 munie de registres. Selon ce qui sera expliqué plus loin, la conversion du signal peut être calculée à la demande, ou de préférence pré-calculée. Dans ce dernier cas, les calculs préalables sont enregistrés dans une mémoire non volatile 13 du microcontrôleur 6 sous forme d'un tableau. Pour commander l'actionneur 2, le microcontrôleur 6 comporte encore deux registres 14 et 15 permettant respectivement de disposer d'un état logique, relatif à l'instant réel de présence de la date caractéristique dans la période, et de la commande à imposer à l'interrupteur 3.

L'interrupteur 3 est de préférence un interrupteur de type optocoupleur. Il comporte une diode électroluminescente 16 en relation avec le registre 15 et qui émet un rayonnement lumineux 17 lorsque le contenu du registre 15 est actif (état logique 1) Elle n'en émet pas dans le cas contraire. La lumière 17 émise par la diode 16 excite les gâchettes 18 d'un jeu 19 de triacs montés tête-bêche. Ces triacs 19 sont par ailleurs, insérés en série dans le circuit reliant la source 1 à l'actionneur 2. L'instant où la diode 16 émet est la date utile. Au début de chaque alternance, lorsque le jeu 19 des triacs n'est pas conducteur, la source 1 est reliée à l'actionneur 2 par une dérivation comprenant une résistance 20 et un jeu de diodes électroluminescentes 21. Les diodes électroluminescentes 21 excitent la base d'un phototransistor 22 dont l'émetteur est relié à une entrée d'un amplificateur opérationnel à grand gain 23. La sortie de l'amplificateur opérationnel 23 délivre un état électrique représentatif de l'état de conduction d'une des diodes d'un jeu de diodes 21.

En principe, au début de chaque alternance, lorsque le jeu des triacs est en circuit ouvert, le signal délivré par l'amplificateur 23 est conventionnellement à l'état 0. Il passe à l'état 1 lorsque les diodes 21 sont court-circuitées par les triacs 19 conducteurs. Cet état logique est stocké dans le registre 14. L'optocoupleur 3 est donc relié d'une part à la charge 2 et à la source 1, et d'autre part au microcontrôleur 6.

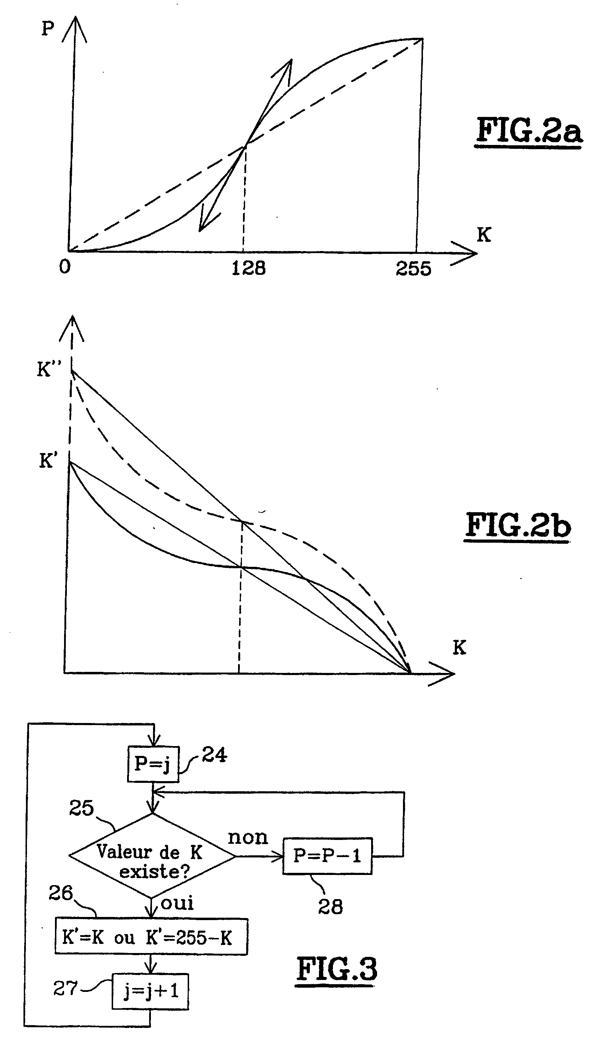

Les figures 2a et 2b montrent les effets habituels d'un circuit à commande de phase de l'état de la technique. La figure 2a renseigne sur l'activité surveillée en fonction de la grandeur K de consigne imposée. Par exemple, l'activité surveillée est la puissance. Compte tenu des principes de la commande de phase, (application de la puissance pendant des portions de la période), et de la nécessaire élévation au carré de la tension pour déterminer la puissance, on peut exprimer cette dernière en fonction de K, de la façon suivante :

$$\text{Formule 1 :} \qquad P = K - (255/2\pi)\,(\sin 2\pi K/255)$$

Dans cette formule, K qui d'une manière normalisée peut valoir entre 0 et 1, a été quantifié sur 8 bits et peut ainsi valoir en binaire de 0 à 255. On constate aisément que le gain de la fonction transfert est maximal pour K = 128 et qu'il est très faible pour K voisin de 0 ou de 255. Le problème du ralliement pour la valeur 0 n'est pas très grave, compte tenu de ce que la puissance dissipée doit être nulle : c'est facile à rallier. Par contre, pour les valeurs élevées, la réactivité de l'asservissement qui utiliserait ces valeurs serait réduite. La valeur numérisée de K est obtenue en prélevant la valeur analogique délivrée par le potentiomètre 4 sur l'entrée 9, et en lui faisant subir une conversion analogique numérique par l'intermédiaire du convertisseur 10. La valeur K, normalisée ainsi sur huit bits, peut être stockée dans un des registres de travail de la mémoire 12.

Dans l'invention, pour linéariser le phénomène de commande, on a prévu de remplacer K par une valeur K', comme cela est montré sur la figure 2b qui montre K en abscisse et K' en ordonnée.

La figure 2b représente en fait, la fonction de transfert réciproque correspondant à la formule précédente. Compte tenu du caractère complexe de cette formule précédente, il n'est pas possible de disposer d'une fonction de transfert réciproque K=f(P) analytique simple. K est ici l'inverse du retard avec lequel on déclenche le jeu des triacs à la date utile par rapport à la date caractéristique. Si K est nul, le retard est maximal : la puissance dissipée est nulle. Par contre, si K est nominal, le retard est nul, la puissance dissipée est maximale. La figure 2b, en plus de la fonction réciproque, effectue, dans le cas présent, une inversion de la valeur de K. En effet, plutôt que de travailler sur l'inverse du retard, on a préféré travailler sur le retard lui-même : c'est la valeur typique que l'on peut utiliser pour commander l'interrupteur 3.

L'obtention de la fonction de transfert réciproque (et inverse le cas échéant) représentée par la figure 2b, est tabulée dans la mémoire 13 à partir de la connaissance du calcul de la fonction de transfert de la figure 2a. Le calcul de cette fonction de transfert s'exprime sous la forme d'un tableau comportant à gauche des valeurs de K évoluant de 1 à 255 pour chaque ligne du tableau, et à droite dans chaque ligne, la valeur de la puissance P correspondant à la formule ci-dessus. A partir de ce tableau, comme le montre la figure 3, il est possible de le lire à l'envers, par dichotomie. Ainsi, on cherche dans ce tableau, au cours d'une étape 24 une valeur de P = j (j vaut 0 a début). Pour cette valeur de P = j, on regarde, dans une étape 25, s'il existe dans le tableau, une valeur de K correspondante. Si une telle valeur est trouvée, on dit, à une étape 26, que la valeur K' est égale à K (ou à 255 - K si on inverse). Puis on recommence en incrémentant j en j+1 à l'étape 27 jusqu'à ce que j atteigne 255. Si la valeur de P retenue ne correspond pas à une valeur du tableau, on modifie P en P-1 et on recommence le test. On le recommence jusqu'à ce que l'on trouve une valeur de P pour laquelle une valeur de K est présente dans le tableau. Pour la valeur de P = j de départ, on attribue alors la valeur de K, donc la valeur de K', trouvée en correspondance. Ce faisant on dispose d'un tableau comportant en entrée (en adresse) les valeurs de P, et en sortie (dans les données stockées à ces adresses) les valeurs de K'. Il est donc possible de constituer un tableau comportant en entrée les valeurs de K (telles que délivrées par le potentiomètre 4) et en sortie les valeurs de K' dont l'application à titre de commande (ou de consigne dans l'asservissement) linéarise la commande du phénomène. Pour un autre phénomène, on utilise une autre formule. On a représenté sur le Tableau 1 la conversion tabulée effectuée dans le cas de la commande de puissance.

La figure 2b montre la fonction de transfert réciproque (et inverse). Elle montre également une modification du calcul de K' lié à la variation, ensemble, des conditions d'utilisation du microcontrôleur 6 et de la fréquence du signal alternatif S1. En effet, si la période de ce signal alternatif est plus longue (sa fréquence est moins élevée), il importe pour commander avec la phase convenable l'actionneur 2, de retarder en conséquence l'application de l'impulsion lumineuse 17 sur les triacs 19. En définitive, pour une valeur K' calculée, le retard à imposer n'est pas K' mais K" qui tient compte de la période réelle du signal S1, mesurée dans les conditions réelles d'utilisation du microcontrôleur 6.

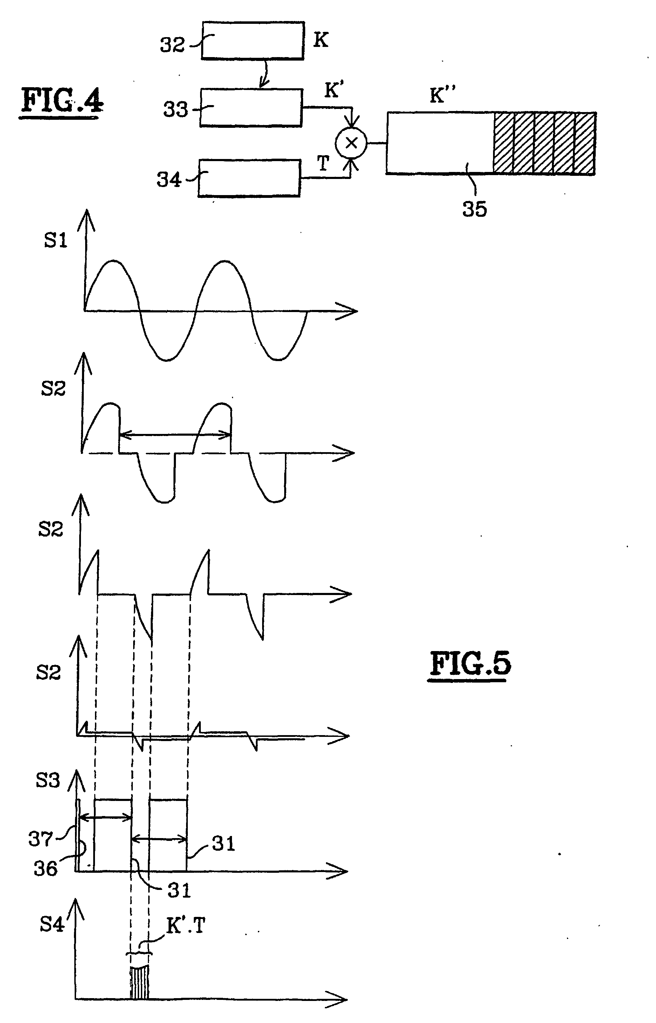

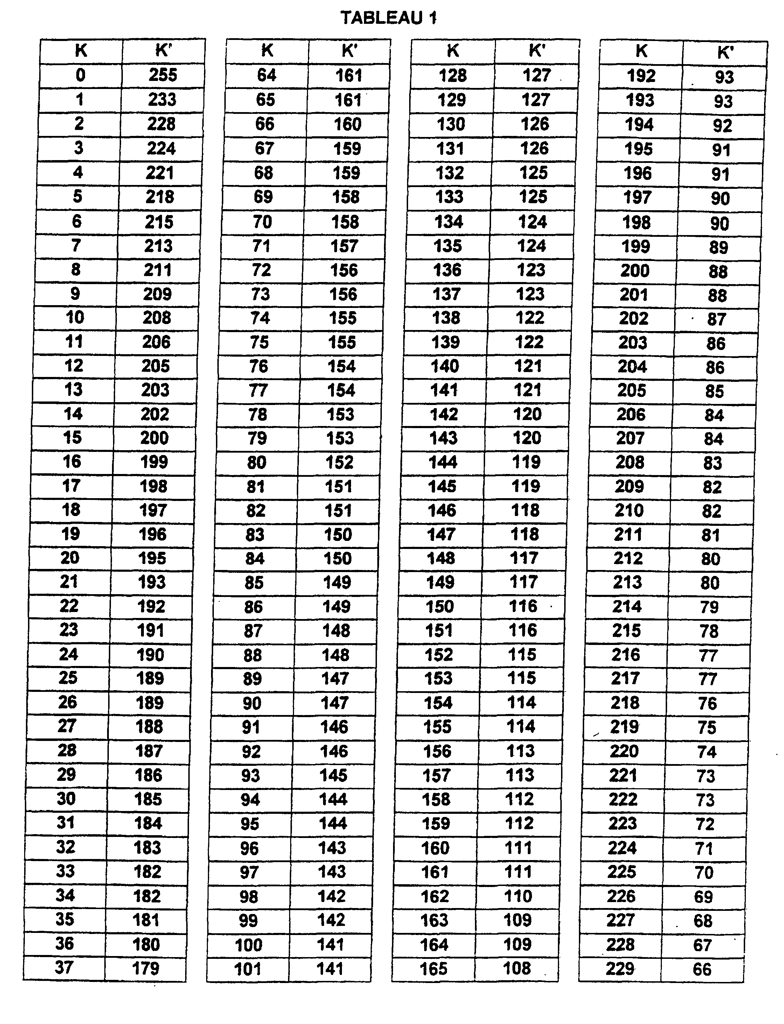

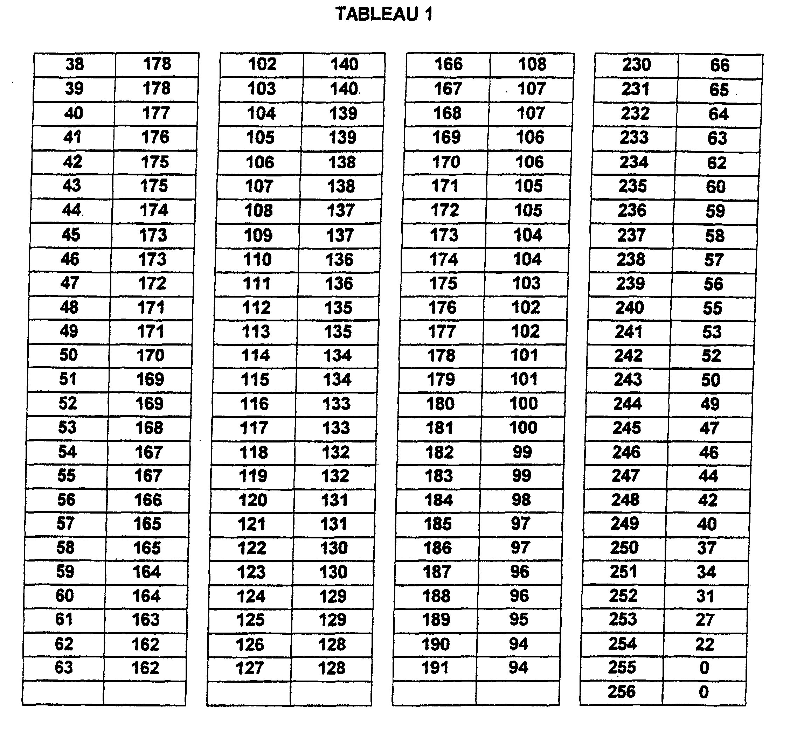

Dans ce but, ce microcontrôleur possède une horloge 29 en relation avec un compteur 30. L'horloge 29 est par exemple une horloge à 15 Khz, le compteur 30 étant un compteur à huit bits. Les figures 4 et 5 permettent de comprendre le fonctionnement de ce compteur. Dans la figure 5, on distingue, respectivement, des signaux temporels représentatifs du signal électrique de puissance S1, d'un signal S2 passant dans le jeu des diodes 21, d'un signal S3 de comptage. Le signal S3 est celui qui est stocké provisoirement dans le registre 14.

Le signal S2 est représenté pour différentes valeurs d'angle de phase de commande. Dans la partie supérieure, la commande est à 33%, dans la partie médiane elle est à 66% et dans la partie inférieure elle est à 100%. Le signal S3 présente des impulsions positives lorsque le courant passe dans les triacs 19. Il est possible, avec le microprocesseur 7 recevant l'état binaire S3 dans le registre 14, de détecter les fronts de descente 31 de S3 pour remettre à 0 le compteur 30 et pour en déclencher le comptage. Ce faisant, le compteur 30 est capable, au bout d'une demi-période, de produire un résultat, stocké dans un registre de la mémoire 12, correspondant à la durée de la demi-période de S1, correspondant donc à la période de S1.

La figure 4 montre trois registres de la mémoire 12. Un premier registre 32 contient la valeur K telle qu'elle est numérisée par le convertisseur analogique numérique 10. Un deuxième registre 33 montre la valeur K' correspondant à la valeur K, après son extraction du tableau 1 de la mémoire 13. En pratique, cette extraction est faite en entrant comme adresse du tableau de la mémoire 13, la valeur K et en prélevant la valeur K' mémorisée à cette adresse dans cette mémoire. Le compte binaire correspondant à la durée de la période est stocké dans un registre 34 de la mémoire 12.

En synchronisme et en avance avec la remise à zéro du compteur, le microprocesseur 7 lit les contenus des registres 33 et 34 et on provoque la multiplication de l'un par l'autre pour en stocker le résultat K" dans un registre 35. D'une manière préférée, les registres 33 et 34 sont des registres de huit bits. Le registre 35 est donc normalement un registre de 16 bits. Afin de normaliser le calcul, la valeur résultante est divisée par 255 ce qui revient à faire une troncature des huit bits,de poids faible du registre 35. On dispose alors dans les huit bits de poids fort du registre 35, une valeur représentative de la durée pendant laquelle il faut attendre avant de commander l'émission de l'excitation lumineuse 17.

Pour ce déclenchement, le microprocesseur 7 compare en permanence l'état du compteur 30 aux huit bits de poids fort stockés dans le registre 35. Cette comparaison est montrée schématiquement par le signal S4 de la figure 5 où les impulsions d'horloge sont présentes pendant une durée correspondant à l'ouverture de l'interrupteur 3 (c'est la commande à 33%). Lorsque le compteur 30 arrive au compte du registre 35, le microprocesseur 7 charge dans le registre 15, un bit représentatif de l'activation de l'excitation 17. Cette activation cesse automatiquement à l'inversion de polarité par désamorçage des thyristors. Puis le procédé recommence pour une période suivante.

En agissant de cette façon, on tient compte d'une manière particulièrement simple des dérives de fonctionnement dues à la fois au microcontrôleur 6 et à l'alimentation de la source 1.

On notera que si la commande est à 100%, le fait de maintenir la diode 16 allumée en permanence fait perdre l'information de synchronisation et de correction des dérives. Ceci n'est cependant pas gênant, compte tenu que dans ces conditions, l'actionneur fonctionne avec son activité maximale : on ne peut pas faire mieux.

La figure 5 montre également un léger retard 36 au déclenchement, par rapport à l'instant 37 de passage par zéro du signal alternatif S1. Il est possible de tenir compte également, dans le signal S4, de cet écart en remplaçant la comparaison du compte binaire du compteur 30 à la valeur K'T par une comparaison à la valeur K'T - l'écart à l'origine. Ceci signifie que même cet écart sera corrigé. En variante la table de la mémoire 13 est corrigée en conséquence.

Dans ce cas la commande sera parfaitement linéaire : il n'y aura pas d'écart à l'origine. La mesure de l'écart à l'origine est de préférence effectuée au démarrage de l'installation. Ceci signifie que, au moment de la mise en service, pendant une double alternance du signal S1, l'interrupteur 3 ne commande pas l'actionneur 2. Par contre, les diodes 21 détectent en des signaux très courts, le passage par 0 du signal S1. Au moment de ces passages par 0, le signal S3 monte à 1. En fait, la durée très courte pendant laquelle le signal S3 monte à 1 est égale au double de l'écart 37-36. En effet, il comporte la partie avant le passage par zéro et la partie après le passage par 0. On mesure la durée de cette impulsion très courte avec le compteur 30. Le résultat est stocké dans un registre de la mémoire 12. Pour obtenir la valeur utile de correction il suffit de diviser ce résultat par deux. En pratique, on fait sauter le bit de poids faible du compte obtenu.

A 50Hz, la période T du signal alternatif est de l'ordre de 10 millisecondes. Le compteur 30 de huit bits, qui est un compteur matériel est prévu pour compter à 125 Khz. Le microcontrôleur 6 sera de préférence cadencé par l'horloge 29 à une fréquence de 4 MHz. La réalisation de la multiplication de la figure 4 ne reprendra en pratique que 32 microsecondes c'est à dire 3/100ème de la durée d'un cycle. C'est négligeable.

En résumé, on propose selon l'invention un procédé d'asservissement d'un actionneur dans lequel on produit un signal de consigne, on mesure en un signal de mesure l'activité de l'actionneur, on mesure en un signal d'erreur l'écart entre ce signal de consigne et ce signal de mesure, et on commande l'actionneur avec ce signal d'erreur caractérisé en ce que on convertit le signal d'erreur par une conversion en un signal converti différent dont l'application à l'actionneur provoque un comportement linéaire de l'activité de l'actionneur en fonction de ce signal d'erreur.

## Revendications

1.  Procédé de commande dans lequel :

    -   on applique un signal électrique périodique à un actionneur par l'intermédiaire d'un interrupteur à coupure automatique,
    -   on produit un signal de commande,
    -   on détermine un écart temporel d'une date utile de commande par rapport à une date caractéristique de ce signal périodique en fonction du signal de commande,
    -   on commande la fermeture périodique de l'interrupteur à cette date utile dans chaque période en appliquant ce signal de commande à l'interrupteur,
    -   on règle l'activité de l'actionneur en modifiant le signal de commande,

    **caractérisé en ce que**

    -   on convertit le signal de commande (K) par une conversion en un signal converti (K') différent dont l'application provoque un comportement linéaire de l'activité de l'actionneur en fonction de ce signal de commande, la conversion mettant en oeuvre une fonction de transfert réciproque (K = f(P)) de l'activité habituelle de l'actionneur (P = f(K)) en fonction du signal de commande (K) ;
    -   on utilise le signal converti pour déterminer l'écart temporel.

2.  Procédé selon la revendication 1, **caractérisé en ce que** l'activité est la vitesse, et **en ce que** la conversion est du type arcsinus.

**3.** Procédé selon la revendication 1 **caractérisé en ce que** l'activité est la puissance et **en ce que** la conversion est du type arcsinus au carré.

**4.** Procédé selon l'une des revendications 1 à 3, **caractérisé en ce que** la conversion est réalisée par une tabulation du signal de commande en un signal converti.

**5.** Procédé selon l'une des revendications 1 à 4, **caractérisé en ce que**

- on mesure la durée de la période du signal périodique et
- on modifie la conversion en fonction de cette mesure.

**6.** Procédé selon la revendication 5 **caractérisé en ce qu'**on multiplie la conversion par la mesure de la durée de la période du signal périodique.

**7.** Procédé selon l'une des revendications 1 à 6, **caractérisé en ce que**

- on commande l'interrupteur avec un optocoupleur.

**8.** Procédé selon les revendications 5 et 7 ensemble, **caractérisé en ce que**

- pour un réglage maximal de l'activité de l'actionneur, on ne modifie pas la conversion en fonction de la durée de la période du signal périodique.

**Patentansprüche**

**1.** Steuerverfahren, bei dem

- ein periodisches elektrisches Signal an ein Wirkglied über einen Unterbrecherschalter mit automatischer Unterbrechung angelegt wird,
- ein Steuersignal erzeugt wird,
- ein zeitlicher Abstand zwischen einem nützlichen Steuerzeitpunkt und einem charakteristischen Zeitpunkt dieses periodischen Signals abhängig vom Steuersignal bestimmt wird,
- das periodische Schließen des Unterbrecherschalters zu diesem nützlichen Zeitpunkt in jeder Periode gesteuert wird, indem das Steuersignal an den Unterbrecherschalter angelegt wird,
- die Aktivität des Wirkglieds durch Veränderung des Steuersignals geregelt wird,

**dadurch gekennzeichnet, daß**

- das Steuersignal (K) durch eine Umwandlung in ein anderes, umgewandeltes Signal (K') umgewandelt wird, dessen Verwendung ein lineares Verhalten der Aktivität des Wirkglieds abhängig von diesem Steuersignal hervorruft, wobei die Umwandlung eine reziproke Transferfunktion (K = f(P)) der üblichen Aktivität des Wirkglieds (P = f(K)) abhängig vom Steuersignal (K) bewirkt,
- das umgewandelte Signal zur Bestimmung des zeitlichen Abstands verwendet wird.

**2.** Verfahren nach Anspruch 1, **dadurch gekennzeichnet, daß** die Aktivität die Geschwindigkeit ist und daß die Umwandlung vom Typ arcsinus ist.

**3.** Verfahren nach Anspruch 1, **dadurch gekennzeichnet, daß** die Aktivität die Leistung ist und daß die Umwandlung vom Typ arcsinus im Quadrat ist.

**4.** Verfahren nach einem der Ansprüche 1 bis 3, **dadurch gekennzeichnet, daß** die Umwandlung durch eine Tabelle zwischen Steuersignal und umgewandeltem Signal realisiert wird.

**5.** Verfahren nach einem der Ansprüche 1 bis 4, **dadurch gekennzeichnet, daß**

- die Dauer der Periode des periodischen Signals gemessen wird
- und die Umwandlung abhängig von diesem Meßwert verändert wird.

**6.** Verfahren nach Anspruch 5, **dadurch gekennzeichnet, daß** die Umwandlung mit dem Meßwert der Dauer der Periode des periodischen Signals multipliziert wird.

**7.** Verfahren nach einem der Ansprüche 1 bis 6, **dadurch gekennzeichnet, daß**

- der Unterbrecherschalter über einen optischen Koppler gesteuert wird.

**8.** Verfahren nach den Ansprüchen 5 und 7 gemeinsam, **dadurch gekennzeichnet, daß**

- für eine maximale Regelung der Aktivität des Wirkglieds die Umwandlung nicht abhängig von der Dauer der Periode des periodischen Signals modifiziert wird.

**Claims**

**1.** Method of control in which:

- a periodic electrical signal is applied to an actuator by the intermediary of a switch with automatic cutoff,
- a control signal is produced,
- a time difference of an appropriate control instant is determined with respect to a characteristic instant of this periodic signal as a function of the control signal,
- the periodic closing of the switch is commanded at this appropriate instant in each period by applying this control signal to the switch,
- the activity of the actuator is adjusted by modifying the control signal,

**characterized in that**

- the control signal (K) is converted by a conversion into a different converted signal (K') whose application causes a linear behaviour of the activity of the actuator as a function of this control signal, the conversion implementing a reciprocal transfer function (K = f(p)) of the usual activity of the actuator (P = f(K)) as a function of the control signal (K);
- the converted signal is used to determine the time difference.

2. Method according to Claim 1, **characterized in that** the activity is speed and **in that** the conversion is of the arcsine type.

3. Method according to Claim 1, **characterized in that** the activity is power and **in that** the conversion is of the arcsine squared type.

4. Method according to one of Claims 1 to 3, **characterized in that** the conversion is carried out by a tabulation of the control signal into a converted signal.

5. Method according to one of Claims 1 to 4, **characterized in that**

- the duration of the period of the periodic signal is measured and
- the conversion is modified as a function of this measurement.

6. Method according to Claim 5, **characterized in that** the conversion is multiplied by the measurement of the duration of the period of the periodic signal.

7. Method according to one of Claims 1 to 6, **characterized in that**

- the switch is controlled with an optocoupler.

8. Method according to Claims 5 and 7 together, **characterized in that**

- for a maximum adjustment of the activity of the actuator, the conversion is not modified as a function of the duration of the period of the periodic signal.

**FIG.1**

FIG.2a

FIG.2b

FIG.3

FIG.4

FIG.5

## TABLEAU 1

| K | K' | K | K' | K | K' | K | K' |
|---|----|---|----|---|----|---|----|
| 0 | 255 | 64 | 161 | 128 | 127 | 192 | 93 |
| 1 | 233 | 65 | 161 | 129 | 127 | 193 | 93 |
| 2 | 228 | 66 | 160 | 130 | 126 | 194 | 92 |
| 3 | 224 | 67 | 159 | 131 | 126 | 195 | 91 |
| 4 | 221 | 68 | 159 | 132 | 125 | 196 | 91 |
| 5 | 218 | 69 | 158 | 133 | 125 | 197 | 90 |
| 6 | 215 | 70 | 158 | 134 | 124 | 198 | 90 |
| 7 | 213 | 71 | 157 | 135 | 124 | 199 | 89 |
| 8 | 211 | 72 | 156 | 136 | 123 | 200 | 88 |
| 9 | 209 | 73 | 156 | 137 | 123 | 201 | 88 |
| 10 | 208 | 74 | 155 | 138 | 122 | 202 | 87 |
| 11 | 206 | 75 | 155 | 139 | 122 | 203 | 86 |
| 12 | 205 | 76 | 154 | 140 | 121 | 204 | 86 |
| 13 | 203 | 77 | 154 | 141 | 121 | 205 | 85 |
| 14 | 202 | 78 | 153 | 142 | 120 | 206 | 84 |
| 15 | 200 | 79 | 153 | 143 | 120 | 207 | 84 |
| 16 | 199 | 80 | 152 | 144 | 119 | 208 | 83 |
| 17 | 198 | 81 | 151 | 145 | 119 | 209 | 82 |
| 18 | 197 | 82 | 151 | 146 | 118 | 210 | 82 |
| 19 | 196 | 83 | 150 | 147 | 118 | 211 | 81 |
| 20 | 195 | 84 | 150 | 148 | 117 | 212 | 80 |
| 21 | 193 | 85 | 149 | 149 | 117 | 213 | 80 |
| 22 | 192 | 86 | 149 | 150 | 116 | 214 | 79 |
| 23 | 191 | 87 | 148 | 151 | 116 | 215 | 78 |
| 24 | 190 | 88 | 148 | 152 | 115 | 216 | 77 |
| 25 | 189 | 89 | 147 | 153 | 115 | 217 | 77 |
| 26 | 189 | 90 | 147 | 154 | 114 | 218 | 76 |
| 27 | 188 | 91 | 146 | 155 | 114 | 219 | 75 |
| 28 | 187 | 92 | 146 | 156 | 113 | 220 | 74 |
| 29 | 186 | 93 | 145 | 157 | 113 | 221 | 73 |
| 30 | 185 | 94 | 144 | 158 | 112 | 222 | 73 |
| 31 | 184 | 95 | 144 | 159 | 112 | 223 | 72 |
| 32 | 183 | 96 | 143 | 160 | 111 | 224 | 71 |
| 33 | 182 | 97 | 143 | 161 | 111 | 225 | 70 |
| 34 | 182 | 98 | 142 | 162 | 110 | 226 | 69 |
| 35 | 181 | 99 | 142 | 163 | 109 | 227 | 68 |
| 36 | 180 | 100 | 141 | 164 | 109 | 228 | 67 |
| 37 | 179 | 101 | 141 | 165 | 108 | 229 | 66 |

## TABLEAU 1

| | | | | | | | |
|---|---|---|---|---|---|---|---|
| 38 | 178 | 102 | 140 | 166 | 108 | 230 | 66 |
| 39 | 178 | 103 | 140 | 167 | 107 | 231 | 65 |
| 40 | 177 | 104 | 139 | 168 | 107 | 232 | 64 |
| 41 | 176 | 105 | 139 | 169 | 106 | 233 | 63 |
| 42 | 175 | 106 | 138 | 170 | 106 | 234 | 62 |
| 43 | 175 | 107 | 138 | 171 | 105 | 235 | 60 |
| 44 | 174 | 108 | 137 | 172 | 105 | 236 | 59 |
| 45 | 173 | 109 | 137 | 173 | 104 | 237 | 58 |
| 46 | 173 | 110 | 136 | 174 | 104 | 238 | 57 |
| 47 | 172 | 111 | 136 | 175 | 103 | 239 | 56 |
| 48 | 171 | 112 | 135 | 176 | 102 | 240 | 55 |
| 49 | 171 | 113 | 135 | 177 | 102 | 241 | 53 |
| 50 | 170 | 114 | 134 | 178 | 101 | 242 | 52 |
| 51 | 169 | 115 | 134 | 179 | 101 | 243 | 50 |
| 52 | 169 | 116 | 133 | 180 | 100 | 244 | 49 |
| 53 | 168 | 117 | 133 | 181 | 100 | 245 | 47 |
| 54 | 167 | 118 | 132 | 182 | 99 | 246 | 46 |
| 55 | 167 | 119 | 132 | 183 | 99 | 247 | 44 |
| 56 | 166 | 120 | 131 | 184 | 98 | 248 | 42 |
| 57 | 165 | 121 | 131 | 185 | 97 | 249 | 40 |
| 58 | 165 | 122 | 130 | 186 | 97 | 250 | 37 |
| 59 | 164 | 123 | 130 | 187 | 96 | 251 | 34 |
| 60 | 164 | 124 | 129 | 188 | 96 | 252 | 31 |
| 61 | 163 | 125 | 129 | 189 | 95 | 253 | 27 |
| 62 | 162 | 126 | 128 | 190 | 94 | 254 | 22 |
| 63 | 162 | 127 | 128 | 191 | 94 | 255 | 0 |
| | | | | | | 256 | 0 |